**Europäisches Patentamt**

**European Patent Office**

**Office européen des brevets**

(19)

(11) Publication number:

**0 274 535**

**A1**

(12) # EUROPEAN PATENT APPLICATION

published in accordance with Art. 158(3) EPC

(21) Application number: **87904101.0**

(22) Date of filing: **19.06.87**

Data of the international application taken as a basis:

(86) International application number:
**PCT/JP87/00404**

(87) International publication number:
**WO87/07873 (30.12.87  87/29)**

(51) Int. Cl.³: **B 60 K 37/00**

(30) Priority: **20.06.86 JP 145450/86**

(43) Date of publication of application:
**20.07.88 Bulletin 88/29**

(84) Designated Contracting States:
**DE FR GB SE**

(71) Applicant: **TONEN SEKIYU KAGAKU K.K.**
**1-1, Tsukiji, 4-Chome**
**Chuo-Ku Tokyo 104(JP)**

(72) Inventor: **TAKADO, Yutaka**
**5-6, Shin-machi**
**Kanagawa-ku, Yokohama-shi Kanagawa 221(JP)**

(72) Inventor: **MIKAMI, Takashi**
**23-48, Izumihon-machi 3-chome**
**Komae-shi Tokyo 201(JP)**

(74) Representative: **Boyes, Kenneth Aubrey et al,**
**Frank B. Dehn & Co. Imperial House 15-19 Kingsway**
**London WC2B 6UZ(GB)**

(54) **INSTRUMENT PANEL OF AUTOMOBILE.**

(57) An instrument panel (7) has its core portion (7a) as a panel main body blow-molded from a synthetic resin material into a hollow box member having a closed sectional shape. The inner space of the instrument panel (7) is used as air vent holes or the like.

FIG. 1

SPECIFICATION

AUTOMOBILE INSTRUMENT PANEL

Technical Field

The present invention relates to an instrument panel to be installed in an automobile.

Background Art

Since an automobile instrument panel is located in front of the passengers in the front seats of an automobile, it should meet the requirements for safety and physical properties such as shock absorption, soft surface, flame retardance, and heat resistance.

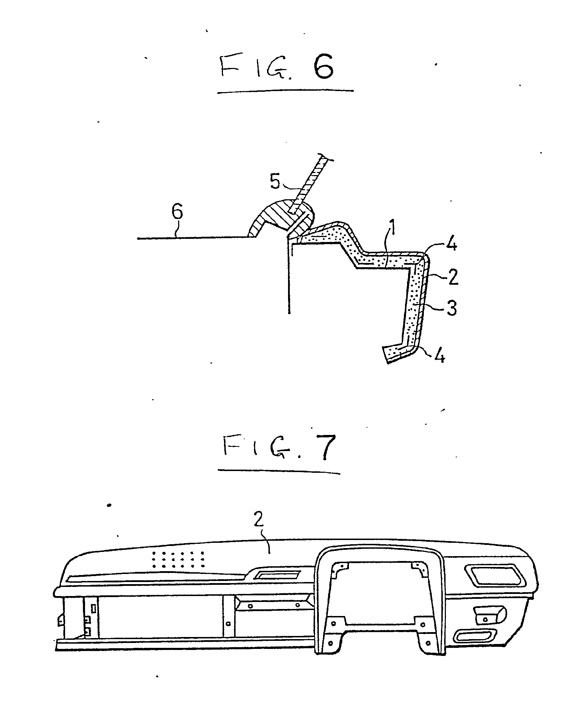

Figs. 6 and 7 show an example of a conventional instrument panel. Reference numeral 1 indicates a reinforcement frame made of steel plate as shown in Fig. 9. Reference numeral 2 indicates a surface skin material formed by injection molding from a rigid plastic material. A void is formed between the frame 1 and the surface skin material, so that expandable urethane is injected into the void to fix them in place after foaming the polyurethane. In Fig. 6 a stiffening insert 4, a window glass 5, and a hood 6 are shown. The urethane foam 3 connects the elements with one another and absorbs shocks and vibrations.

1

The conventional instrument panel shown in Figs. 6 and 7 is expensive to produce because it has many parts and production steps. In addition, if the surface skin 2 is injection-molded from the material filled with an inorganic filler to increase stiffness, the weld strength decreases, and warpage occurs because the strength becomes extremely anisotropic.

Another disadvantage of the conventional instrument panel is that it is necessary to provide an additional member adapted for air passage and wiring passage inside the panel, leading to a complex structure.

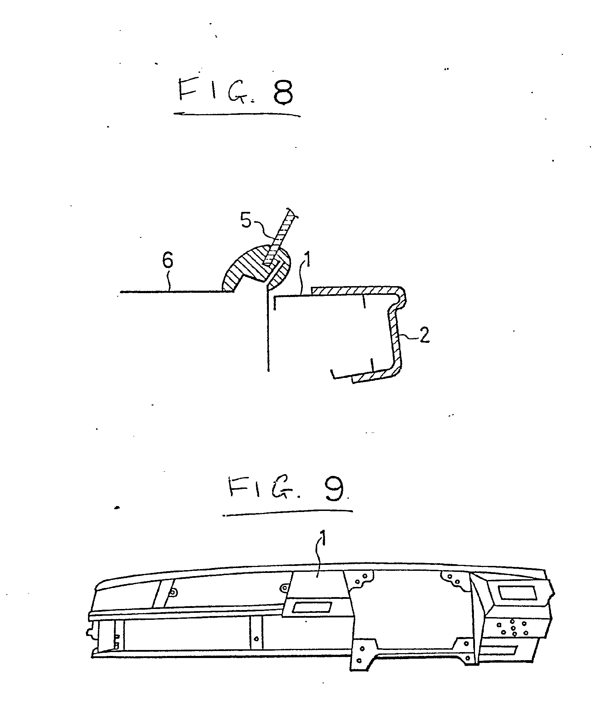

Fig. 8 shows another conventional example. In this case, while urethane foam 3 is not used, the surface skin material 2, which is made by injection molding from ABS resin or glass fiber-reinforced polypropylene (PP), is fixed directly to the reinforcement frame 1.

Such an instrument panel is constructed of fewer parts than that shown in Fig. 6; but its cushioning properties depend entirely on the performance of the elastomeric material attached to the surface skin, thus making it difficult to greatly improve the cushioning properties.

## Disclosure of the Invention

An object of the present invention is to provide an automobile instrument panel that does not have the above-mentioned disadvantages, is more economical both in terms of the

2

number of parts and the fabrication methods, has no warpage, has good cushioning properties, and permits the inside space to be effectively used for air vents.

The above-mentioned object of this invention is achieved by an automobile instrument panel characterized in that the panel body is formed in the shape of a hollow box having a closed cross-section by blow molding of a synthetic resin material.

According to the present invention, the surface skin material is integrally formed in a mold, which eliminates the need for bonding steps and simplifies the assembling steps.  In addition, the hollow box structure provides increased cushioning properties and may form an integral molded structure with the glove box and console box.  Since the instrument panel of the invention is produced from a cylindrical parison, it has the advantage that weld lines do not take place, localized decrease of strength does not occur, there is no effect of orientation, and there is no possibility of warpage, even if the material is incorporated with a filler.

## Brief Description of the Drawings

Fig. 1 is a vertical sectional side view showing example 1 of the automobile instrument panel of the present invention.

Fig. 2 is a front view of the same automobile instrument panel as shown in Fig. 1.

Fig. 3 is a front view showing example 2.

3

Fig. 4 is a plan view showing example 2.

Fig. 5 is a vertical sectional view showing example 3.

Fig. 6 is a vertical sectional view showing a conventional example.

Fig. 7 is a front view of the same conventional example as shown in Fig. 6.

Fig. 8 is a vertical sectional side view showing another conventional example.

Fig. 9 is a front view of a reinforcing frame.

### Preferred Embodiments to Carry out the Invention

The invention is now described in more detail by reference to the following examples:

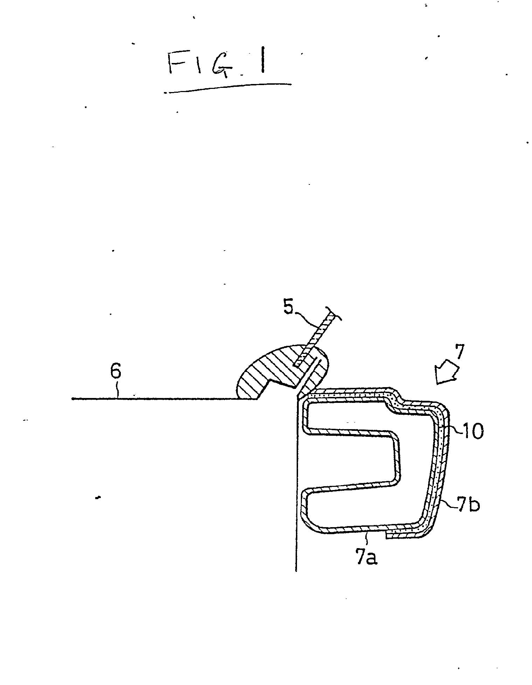

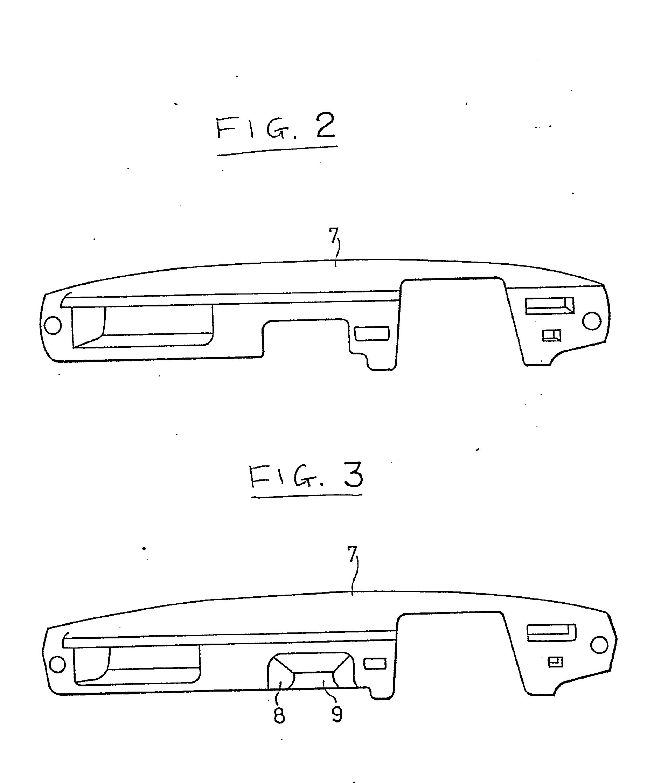

Fig. 1 is a vertical sectional side view of example 1 of the automobile instrument panel of the invention. Fig. 2 is a front view of the same example. The reference numeral 7 in Fig. 2 indicates the instrument panel of the invention.

The instrument panel 7 has a core 7a as the main body. The core 7a is formed by blow molding from a synthetic resin. It is a hollow box having a closed section. The reference numeral 7b indicates the surface skin material, which is previously placed in the frame of the mold and fusion-bonded to the surface of the core 7a at the time of blow molding of the core 7a. The synthetic resin for the core 7a includes polypropylene (PP), polyethylene (PE), polyamide (PA), polyvinyl chloride (PVC),

4

polyacetal (POM), polyester (PETP), polybutylene terephthalate (PBTP), modified polyphenylene oxide (modified PPO), polysulfone (PSF), polyarylate (PAR), and polyphenylenesulfide (PPS). They may be used singly or in combination with an elastomer such as ethylene-propylene rubber (EPR) and ethylene-propylene-diene copolymer (EPDM) or with at least one inorganic filler such as talc, calcium carbonate, mica, and glass fiber. For improved bonding between dissimilar materials, the composition may be blended with an acidified polyolefin such as that acidified by maleic anhydride.

Examples of the molding material are shown below.

    a.    High density polyethylene (HDPE) (alone)

    b.    Modified PPO (alone)

    c.    Nylon-6 (alone)

    d.    Polypropylene (PP) + mica + modified polypropylene

    e.    HDPE + EPR + glass fiber (GF) + modified polyethylene

    f.    Modified PPO + PP + modified polypropylene

The molding material should have an MFR (melt flow rate) of 1.0 or less so that it is not subject to drawdown at the time of a large-scale blow molding.

The surface skin material 7b may be vacuum-formed by combining an external PVC leather sheet and an internal foamed PP sheet. It may also be made up of a polyester fiber fabric or thermoplastic elastomer sheet as the surface skin, and made up of a foamed PP sheet or polyurethane foam as the inside cushioning material. The surface skin material 7b, with or without

5

preliminary vacuum forming, is attached to the inside of an aluminum blow mold having suction vents. After being attached to a blow mold, the surface skin material 7b may be provided with a foamed material 10.

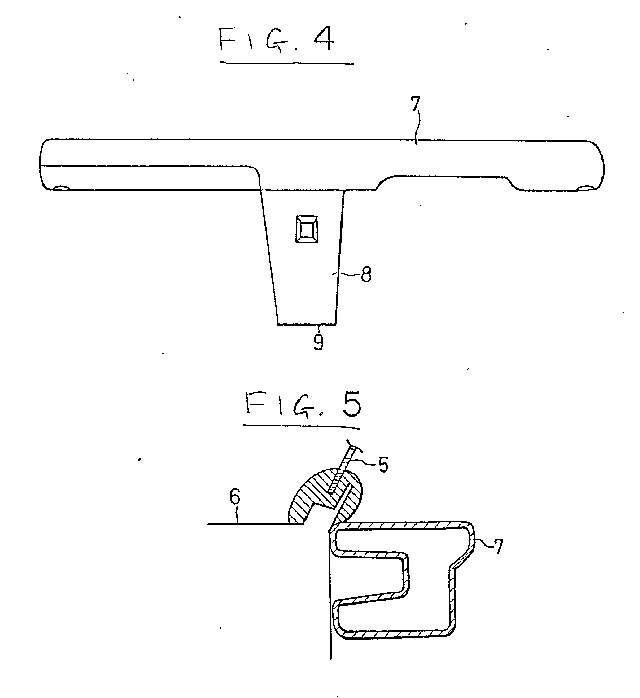

Figs. 3 and 4 illustrate example 2 of the invention. In this example, the console box 8 and the air vent 9 in the console box 8 are integrally formed when the core 7a is blow-molded. Since the core 7a has a closed cross-section, the inside of the box 8 can be used as the vent hole 9. This eliminates the necessity of installing a separate duct to send air to the rear seats from an air conditioner. The same thing can be mentioned regarding the glove box and wiring duct. Thus the inside space of the core 7a can be effectively used.

Fig. 5 shows example 3 of the invention. This instrument panel 7 consists of a blow-molded hollow box of ABS resin or glass fiber (GF)-reinforced polypropylene (PP), thereby eliminating the need for the surface skin material.

The instrument panel 7 produced as mentioned above can be fixed to the car body with embedded bolts, nuts, or by bolting through mechanically drilled holes.

This instrument panel meets the safety standards for shock absorption set in the United States. (There are no such standards in Japan.) The standards are provided in FMVSS No. 201, ADR No. 21, and Safety Standard, Article 20, Section 4, etc. According to FMVSS No. 21, the instrument panel should decelerate the head model (15 lb, 6.5 inch in dia.) hitting it at a speed of construction prevents a weld line, does not suffer from localized decrease of strength, and does not warp because of any influence of orientation, even if it is made of a filled composition.

In addition, the instrument panel of this invention may form an integral molded structure with glove box and console box, which are common attachments in an instrument panel. The inside space of the hollow box can be used for wiring and other purposes.

This instrument panel of this invention also permits the simultaneous molding of the surface skin. This eliminates the need for bonding steps, reduces the number of parts, and simplifies the assembling steps, contributing to lower production costs.

## Claim

An automobile instrument panel characterized in that the panel body is formed in the shape of a hollow box having a closed cross-section by blow molding of a synthetic resin material.

Claim

FIG. 1

FIG. 2

FIG. 3

FIG. 4

7

8

9

FIG. 5

5

6

7

FIG. 6

FIG. 7

FIG. 8

FIG. 9.

# INTERNATIONAL SEARCH REPORT

International Application No    PCT/JP87/00404

---

**I. CLASSIFICATION OF SUBJECT MATTER** (if several classification symbols apply, indicate all) [3]

According to International Patent Classification (IPC) or to both National Classification and IPC

Int.Cl$^4$    B60K37/00

---

**II. FIELDS SEARCHED**

| Minimum Documentation Searched [4] | |
|---|---|
| Classification System | Classification Symbols |
| IPC | B60K37/00 |

Documentation Searched other than Minimum Documentation
to the Extent that such Documents are Included in the Fields Searched [5]

| | |
|---|---|
| Jitsuyo Shinan Koho | 1969 – 1986 |
| Kokai Jitsuyo Shinan Koho | 1971 – 1986 |

---

**III. DOCUMENTS CONSIDERED TO BE RELEVANT** [14]

| Category * | Citation of Document, [16] with indication, where appropriate, of the relevant passages [17] | Relevant to Claim No. [18] |
|---|---|---|
| X | JP, U, 61-48822 (Kanto Seiki Co., Ltd.) 2 April 1986 (02. 04. 86) (Family: none) | 1 |

---

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use. exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance. the claimed invention cannot be considered to involve an inventive step when the document is combined with one or more other such documents. such combination being obvious to a person skilled in the art

"&" document member of the same patent family

---

**IV. CERTIFICATION**

| Date of the Actual Completion of the International Search [2] | Date of Mailing of this International Search Report [2] |
|---|---|
| September 11, 1987 (11. 09. 87) | September 28, 1987 (28. 09. 87) |
| International Searching Authority [1] | Signature of Authorized Officer [20] |
| Japanese Patent Office | |

Form PCT/ISA/210 (second sheet) (October 1977)